# EUROPEAN PATENT APPLICATION

(11) **EP 3 396 606 A1**
(43) Date of publication of application: **31.10.2018**
(21) Application number: 18169350.8
(22) Date of filing: 25.04.2018
(51) Int. Cl.: G06Q 10/02, G06F 17/30

(54) **SYSTEMS, DEVICES, AND METHODS FOR AUTOMATIC WEBSITE GENERATION AND DOMAIN NAME SUGGESTION**

(30) Priority: 25.04.2017 US 201715496694
(71) Applicant: Verisign, Inc., Virginia 20190 (US)
(72) Inventor: COCHRAN, John, RESTON, VA, 20190 (US); FREGLY, Andrew, RESTON, VA, 20190 (US); JAIN, Ajay, RESTON, VA, 20190 (US); KAIZER, Andrew, RESTON, VA, 20190 (US); LAKSHMANAN, Ashvatth, RESTON, VA, 20190 (US); SHETH, Swapneel, RESTON, VA, 20190 (US); SHYAMSUNDER, Karthik, RESTON, VA, 20190 (US); ZHAO, Zhao, RESTON, VA, 20190 (US)
(74) Representative: Cabinet Beau de Loménie

(57) **Abstract**

Embodiments relate to systems, devices, computer-readable media, and computer-implemented methods for automatically generating a website and domain name suggestions by receiving (400), from a website server, user content, determining (410) a user type based on the user content, separating (420) the user content into multiple sets of user content, automatically generating webpages of a website based on the user content, where the webpages include a homepage and a webpage corresponding to each set of user content of the multiple sets of user content, automatically generating (430) domain name suggestions based on the user content, transmitting a domain name lookup request based on the domain name suggestions, determining available domain name suggestions based on a response to the domain name lookup request, receiving a request for a generated webpage, and providing the generated webpage and the available domain name suggestions based on the request.

## Description

### BACKGROUND

The rise of computer networks and the Internet has resulted in an enormous number of applications and services that are available to computer network users, such as digital video, digital audio, shared applications, storage servers, remote printing, email, instant messaging, etc. Additionally, computer networks have increased the ease of publication and dissemination of user-generated content. For example, social networking websites and services (hereinafter "social networking websites") allow users to construct public/semi-public profiles, articulate a list of other connected users (e.g., friends, family, coworkers, acquaintances, etc.), share their information with other users, and view information generated by other users.

In general, social networking websites provide users with a location on the World Wide Web where they can share their information and/or advertise their products or services. Without such websites and services, to achieve the same results, users would be required to design and code a website, select and register a unique domain name for their website, and set up website hosting with a hosting provider.

While social networking websites can save users many hardships normally associated with setting up a website, there are numerous disadvantages to their use. For example, the providers of the social networking websites control the look and feel of the individual webpages, control the security of the website, control the reliability of the website, control access to the website and the individual webpages, and control and own the information that is posted on the website. Accordingly, unlike users that own their own websites, social networking website users may have little or no control over how their webpage(s) looks, how secure their information is, whether access to their information is reliable, and/or what data is allowed to be posted.

Therefore, systems, methods, and computer-readable media are desirable that can provide the control benefits of a user-owned website with the ease of use of a social networking website.

### SUMMARY

The present disclosure relates to methods, systems, devices, and computer-readable media for automatically generating a website and domain name suggestions by receiving, from a website server, user content, determining a user type based on the user content, separating the user content into multiple sets of user content, automatically generating webpages of the website based on the user content, where the webpages include a homepage and a webpage corresponding to each set of user content of the multiple sets of user content, automatically generating domain name suggestions based on the user content, transmitting a domain name lookup request based on the domain name suggestions, determining available domain name suggestions based on a response to the domain name lookup request, receiving a request for a generated webpage, and providing the generated webpage and the available domain name suggestions based on the request.

In some embodiments, automatically generating the website and domain name suggestions can include receiving a selection of an available domain name suggestion of the available domain name suggestions, transmitting a domain name registration request that includes the available domain name suggestion that was selected, and initiating hosting of the website by storing the webpages and requesting an Internet Protocol (IP) address for the website, where the domain name registration request further includes the IP address for the website.

In further embodiments, automatically generating the website and domain name suggestions can include receiving, from the website server, an indication of a change to the user content, and updating the webpages based on the indication of the change.

In some implementations, automatically generating the website and domain name suggestions can include receiving, from a user associated with the user content, a request to change the user content, and updating the plurality of webpages based on the request.

In further implementations, the website server can correspond to a social networking website, and the user content can include textual information, images, or videos.

In still further implementations, the user type can be at least one of an individual or an entity, and an entity can be at least one of an educational entity, a business, a company, a group, an institute, a community, a brand, a website, a blog, a product, an area of interest, a hobby, an occupation, or a public figure.

In some embodiments, automatically generating the webpages can include determining a website template based on the user type or the user content.

In other embodiments, automatically generating the domain name suggestions can include extracting keywords from one or more of textual information, images, or videos in the user content, and generating the domain name suggestions using the keywords.

In further embodiments, the generated webpage can include, a mockup webpage corresponding to the webpages, a homepage, or the available domain name suggestions.

In some implementations, separating user content can include generating interest clusters based on the user content and the interest clusters can include pointers to corresponding content.

In other implementations, automatically generating the domain name suggestions based on the user content can include automatically generating the domain name suggestions based on keywords associated with the interest clusters.

In further implementations, automatically generating the website and domain name suggestions can include receiving a selection of an available domain name suggestion, where automatically generating the webpage based on user content can include automatically generating the webpage based on the selection of the available domain name suggestion and the webpage is generated using content that corresponds to an interest cluster used to generate the available domain name suggestion that was selected.

### BRIEF DESCRIPTION OF THE DRAWINGS

The accompanying drawings, which are incorporated in and constitute a part of this specification, illustrate various embodiments of the present disclosure and together, with the description, serve to explain the principles of the present disclosure. In the drawings:
FIG. 1 is a diagram illustrating an example of an automatic website generation and domain name suggestion system, consistent with certain disclosed embodiments;
FIG. 2 is a flow diagram illustrating an example of a process for initiating the generation of a website and domain name suggestions, consistent with certain disclosed embodiments;
FIG. 3 is a flow diagram illustrating an example of a process for triggering and facilitating website generation and domain name suggestion, consistent with certain disclosed embodiments;
FIG. 4 is a flow diagram illustrating an example of a process for automatically generating a website and domain name suggestions, consistent with certain disclosed embodiments;
FIG. 5 is a flow diagram illustrating an example of a process for automatically managing a website, consistent with certain disclosed embodiments;
FIG. 6 is a flow diagram illustrating an example of a process for automatically generating a website and domain name suggestions and managing the website, consistent with certain disclosed embodiments;
FIG. 7 is a flow diagram illustrating an example of a process for automatically generating a website and domain name suggestions, consistent with certain disclosed embodiments; and
FIG. 8 is a diagram illustrating an example of a hardware system for automatically generating websites and domain name suggestions, consistent with certain disclosed embodiments.

### DETAILED DESCRIPTION

The following detailed description refers to the accompanying drawings. Wherever convenient, the same reference numbers are used in the drawings and the following description to refer to the same or similar parts. While several examples of embodiments and features of the present disclosure are described herein, modifications, adaptations, and other implementations are possible, without departing from the spirit and scope of the present disclosure. Accordingly, the following detailed description does not limit the present disclosure. Instead, the proper scope of the disclosure is defined by the appended claims.

Social networking websites allow users to generate and maintain a webpage or webpages for sharing user-generated content, without requiring users to design and code the website, select and register a unique domain name for their website, and set up website hosting with a hosting provider. The process for creating a webpage on a social networking website is generally user-friendly. For example, social networking websites generally provide a default webpage design, and the user can enter information and media (e.g., textual data, images, audio, video, etc.) into the default design. Thus, the user does not have to design and code the webpage.

However, by using the social networking website, users are generally limited in the control they have over their webpages and the content therein. This includes control of storage, processing, and networking efficiency of the website, the security of the website, the design of the website, the accessibility to their data, and what data can be posted. Moreover, webpages on social networking websites often include extraneous content that may not be useful to particular users, such as links to the social networking website's homepage, website navigation and search bars, navigation links, navigation tabs, header information, footer information, advertising, contact information, copyrights, dates, style sheets, etc. The extraneous content can result in larger webpage files that are transmitted to the user devices, and, accordingly, because the extraneous content is not useful to the user, the extraneous content in the large webpage files waste processing, networking, and storage resources for the user and for viewers of the user's content when accessing the large webpage files.

As discussed herein, content from a user's webpage or webpages on, for example, a social networking website can be used to generate a standalone website and to generate domain name suggestions for the website. For example, an automatic website generation server can obtain the user content from the user's social networking webpage(s) (e.g., textual data, images, video, audio, etc.), can parse the content, determine a type of the user, group the content, select a website template, generate the website, generate domain name suggestions, and provide the website and the domain name suggestions to the user. Thus, a standalone website can be automatically generated with the simplicity of creating a webpage on a social networking website.

Moreover, the user can control the look and feel of the standalone website, can control how the website is hosted, can control the security of the website, and can fully control the data that is presented on the website. Further, the standalone website can be designed not to contain extraneous content that is not useful to the user, saving processing, networking, and storage resources for the user and for viewers of the user's content.

Additionally, the automatic website generation server can generate domain name suggestions for the user based on, for example, user content form the user's social networking webpage, a determined type of the user, and/or determined groups that include the user content. Thus, the user is not required to perform the arduous task of creating a domain name, which can involve determining a descriptive domain name, submitting the determined domain name to a service that determines domain name availability (e.g., a domain name lookup request to a domain name registry or a service that communications with a domain name registry), receiving an indication that the determined domain name is not available, determining additional descriptive domain names, and repeating the process until an available domain name is found. Such a process of determining a domain name can waste the user's time, as well as processing and networking resources due to the repeated communications between the user's device and the server that determines domain name availability.

Therefore, an automatic website generation and domain name suggestion system provides the ease of use of using a social networking website with the control and efficiency of maintaining a standalone website.

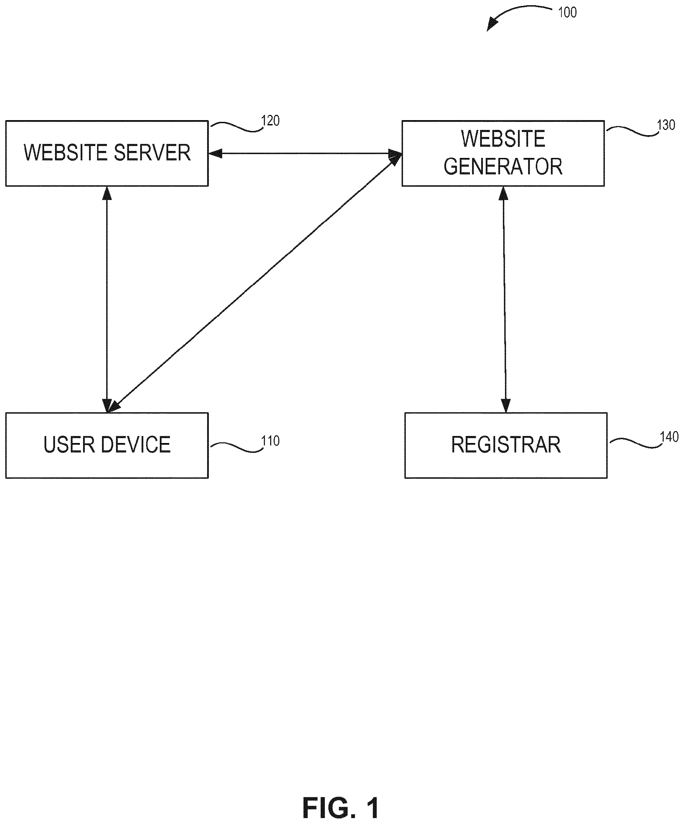

FIG. 1 is a diagram illustrating an example of an automatic website generation and domain name suggestion system 100, consistent with certain disclosed embodiments. The automatic website generation and domain name suggestion system 100 can include a user device 110, a website server 120, a website generator 130, and a Domain Name System registrar 140.

In some implementations, the user device 110 can represent one or more computing devices. For example, the user device 110 can represent one or more webservers, databases, mainframe devices, personal computing devices (e.g., laptops, desktops, tablet computers, smartphones, etc.), or other computing devices. In additional embodiments, the user device 110 can be a computing device of an end user of the website server that desires to generate a website using the website generator 130. For example, the end user may maintain a webpage on a social networking website hosted on the website server 120, and the end user may authorize the website server 120 to provide the user's content to the website generator 130 to allow the website generator 130 to generate a website and domain name suggestions for the user, as described in further detail below.

For the sake of providing a simplified example, FIG. 1 depicts a single user device 110. However, in various embodiments, multiple user devices of multiple users can utilize the website server 120. For example, multiple users using multiple user devices can maintain webpages on a social networking website hosted on the website server 120, multiple users using multiple user devices can access webpages on the website server 120, and multiple users using multiple user devices can authorize the website server 120 to provide user content to the website generator 130 to allow the website generator 130 to generate websites and domain name suggestions for the users.

In some embodiments, the website server 120 can represent one or more computing devices. For example, the website server 120 can represent one or more webservers, databases, mainframe devices, or other computing devices. In additional embodiments, the website server 120 can be a server of a social networking website that maintains and manages the social networking website, maintains and manages social media profiles, and provides access to webpages of the website (e.g., via Hypertext Transfer Protocol (HTTP) requests). The website server 120 can, in some implementations, when authorized by a user (e.g., on the user device 110), provide user content to the website generator 130 to allow the website generator 130 to generate websites and domain name suggestions, as described below.

In additional embodiments, the website server 120 can redirect a user device (e.g., the user device 110) to the generated websites and domain name suggestions.

For the sake of providing a simplified example, FIG. 1 depicts a single website server 120. However, in various embodiments, multiple website servers can interact with multiple user devices and the website generator 130. For example, different website servers can host different websites (e.g., different social networking websites), the different website servers can provide user content to the website generator 130, and the website generator 130 can generate websites and domain name suggestions for the users of the different websites.

In some embodiments, the website generator 130 can represent one or more computing devices. For example, the website generator 130 can represent one or more webservers, databases, mainframe devices, or other computing devices. In additional embodiments, the website generator 130 can be a server that interacts with website servers (e.g., the website server 120) and user devices (e.g., the user device 110) to retrieve user content from the website servers, generate websites, and generate domain name suggestions. Additionally, in some embodiments, the website generator 130 can submit user-selected domain names to the registrar 140, host the generated website, and/or manage the generated website.

In some embodiments, the registrar 140 can represent one or more computing devices. For example, the registrar 140 can represent one or more webservers, databases, mainframe devices, or other computing devices. In some embodiments, the registrar 140 can be a domain name registrar that provides retail domain name registration and management services to registrants. The registrar 140 can, in some implementations, be accredited by a domain name registry and/or the Internet Corporation for Assigned Names and Numbers (ICANN) or vertically integrated with a domain name registry. Accordingly, in such embodiments, management services provided by the registrar 140 are performed in accordance with guidelines designated by the domain name registry. The registrar 140 can, in further embodiments, purchase domain names "wholesale" from the domain name registry, sell domain names at retail to registrants, such as, for example, a user on the user device 110, or sell domain names via resellers.

In further embodiments, the registrar 140 can be a domain name registry that maintains an authoritative list of at least one top-level domain (TLD) and publishes Domain Name System (DNS) TLD zones that are used to resolve domain name queries. In still further embodiments, the registrar 140 can be a domain name reseller that is not accredited as a registrar through a domain name registry and/or through ICANN, but that provides retail domain name registration and management services to registrants through an accredited registrar.

For the sake of providing a simplified example, FIG. 1 depicts a single registrar 140. However, in various embodiments, multiple registrars, registries, and/or resellers can be used by the website generator 130 to, for example, determine domain name availability of domain name suggestions and/or register user-selected domain names.

The automatic website generation and domain name suggestion system 100 described above is merely a simplified example of such a system. In various embodiments, the automatic website generation and domain name suggestion system 100 can include additional registries, registrars, resellers, user devices, website servers, and website generators, etc. Additionally, the automatic website generation and domain name suggestion system 100 can include other DNS entities or website entities, such as, for example, recursive name servers, internet service providers, website hosting providers, etc.

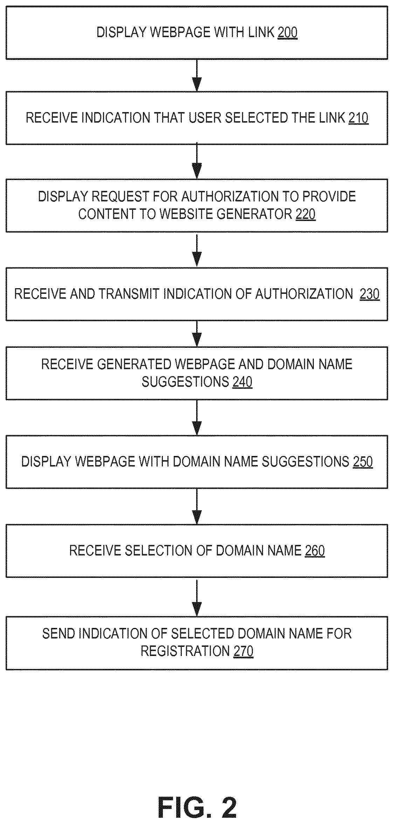

FIG. 2 is a flow diagram illustrating an example of a process for initiating the generation of a website and domain name suggestions, consistent with certain disclosed embodiments. In some embodiments, the method described in FIG. 2 can be performed using a computing device such as, for example, a webserver, a mainframe device, a personal computing device, etc.

In some implementations, the computing device can be, for example, a user device, such as, for example, the user device 110, described above with regard to FIG. 1.

The process can begin in 200, when the computing device displays a webpage (e.g., using a browser program). In some embodiments, the computing device can display the webpage in response to a user entering a domain name, the user clicking on a hyperlink, a redirection to the webpage, etc. In further embodiments, the webpage can be a webpage of a social networking website.

The webpage can include a hyperlink associated with a website generator (e.g., the website generator 130). In some embodiments, the hyperlink can include text, images, and/or video that indicates that clicking on the hyperlink will allow the user to automatically create a custom website.

In 210, the computing device can receive an indication that the user clicked or otherwise selected the hyperlink. In response to the indication of the selection, in some embodiments, the computing device can display a request for authorization to provide content to a website generator service.

If the user indicates that authorization is not granted, the computing device may not proceed with a website generation and name suggestion process, and may allow the user to resume normal browsing of the website.

However, if the user indicates that authorization is granted, the computing device can receive the indication of authorization in 230 and then can transmit the indication of authorization to a website server of the website (e.g., website server 120 shown in FIG. 1).

In 240, the computing device can receive an automatically generated webpage and domain name suggestions. In some embodiments, the browser program on the computing device can receive a redirect to the automatically generated webpage from the webpage currently being displayed on the browser program. In various embodiments, the automatically generated webpage can include the domain name suggestions, as discussed in further detail below.

In 250, the automatically generated webpage can be displayed on the computing device (e.g., using the browser program). In some embodiments, the domain name suggestions can be displayed with the automatically generated webpage, while, in other embodiments, the domain name suggestions can be displayed separately (e.g., as a separate webpage).

In 260, the computing device can receive an indication of a user-selected domain name suggestion. Additionally, in some implementation, the automatically generated webpage may allow the user to select a domain name suggestion, authorize registration of the selected domain name suggestion, and authorize hosting of the generated website. In further implementations, the automatically generated webpage can additionally provide text boxes for a user of the computing device to enter name and contact information, as well as administrative, billing, and payment information for registering the domain name and/or hosting the website.

In 270, the computing device can send an indication of the user-selected domain name to, for example, the website generator. In various embodiments, in response to receiving the selected domain name, the website generator can register the domain name, complete generation of the website, initiate hosting of the website, etc., as discussed in further detail below.

While the steps depicted in FIG. 2 have been described as performed in a particular order, the order described is merely an example, and various different sequences of steps can be performed, consistent with certain disclosed embodiments. Additionally, the steps are described as discrete steps merely for the purpose of explanation, and, in some embodiments, multiple steps may be performed simultaneously and/or as part of a single computation. Further, the steps described are not intended to be exhaustive or absolute, and various steps can be inserted or removed.

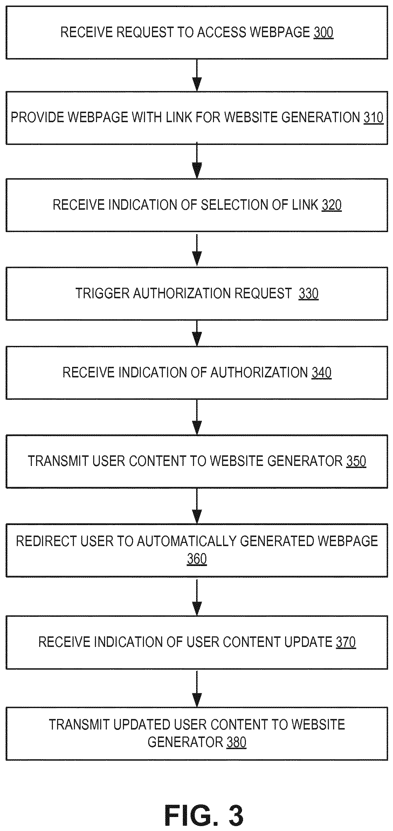

FIG. 3 is a flow diagram illustrating an example of a process for triggering and facilitating website generation and domain name suggestion, consistent with certain disclosed embodiments. In some embodiments, the method described in FIG. 3 can be performed using a computing device such as, for example, a webserver, a mainframe device, a personal computing device, etc. In some implementations, the computing device can be, for example, a website server, such as, for example, the website server 120, described above with regard to FIG. 1. Also, as described above, the website hosted by the website server may be a social media website.

The process can begin in 300, when the computing device receives a request to access a webpage. In various embodiments, the computing device can store webpages of a website (e.g., a social networking website) and/or can perform the backend logic for the website. Accordingly, the computing device can respond to requests for access to webpages of the website by providing, for example, Hypertext Markup Language (HTML) documents and/or other files in response to the requests.

Thus, in 310, the computing device can response to the request in 300 by providing the requested webpage. In some embodiments, the webpage can include a hyperlink associated with a website generator (e.g., the website generator 130).

In 320, the computing device can receive an indication that a user clicked the hyperlink included in the webpage.

In some embodiments, in 330, in response to the indication that the user clicked the hyperlink, the computing device can trigger an authorization request at the user's device to provide content to a website generator. In other embodiments, the request for authorization can be initiated locally by the user's device, as discussed with regard to FIG. 2.

In 340, the computing device can receive an indication that the user provided authorization.

Based on the authorization, in 350, the computing device can transmit a set of user content to a website generator (e.g., the website generator 130 shown in FIG. 1). For example, the computing device can be a website server of a social networking website and the user can have an account and webpage on the social networking website. The user's social media account may be associated with textual information about the user, content posted to the user's webpage (e.g., textual data, images, video, etc.), content posted by the user (e.g., on the user's webpage and on other user's webpages), indications of user accounts connected to the user (e.g., social networking connections), etc.

In some embodiments, the user can be an individual user, and the user's webpage can be a personal webpage. In further embodiments, the user can be an entity (e.g., a business, an organization, a group, an event, etc.), and the user's webpage can be associated with the entity. Examples of content that can be provided by the computing device to the website generator include, but are not limited to, an individual's name, an entity's name, residence information, an entity's address, payment information, a city of birth, a date of birth, a date of creation of the entity, a current address, hobbies, an occupation, education information, images, videos, an indication of a type of entity, an indication of a type of product sold, an indication of a type of service provide, an event date, an event location, indications of connected users, content posted to the user's webpage, content posted by the user, etc.

In 360, the computing device can redirect the user's device to an automatically generated webpage.

As discussed above, the automatically generated webpage can include domain name suggestions, and the user can select a domain name suggestion and initiate website hosting of an automatically generated website.

In 370, the computing device can receive an indication that the user updated content corresponding to the user's account. For example, the user may have posted new content, changed personal or business information, etc.

In response to the indication that the user updated content, in 380, the computing device can transmit the indication of the updated information to the website generator. Accordingly, the automatically generated website can be updated when the user updates content at the website server (e.g., at a social networking website server).

While the steps depicted in FIG. 3 have been described as performed in a particular order, the order described is merely an example, and various different sequences of steps can be performed, consistent with certain disclosed embodiments. Additionally, the steps are described as discrete steps merely for the purpose of explanation, and, in some embodiments, multiple steps may be performed simultaneously and/or as part of a single computation. Further, the steps described are not intended to be exhaustive or absolute, and various steps can be inserted or removed.

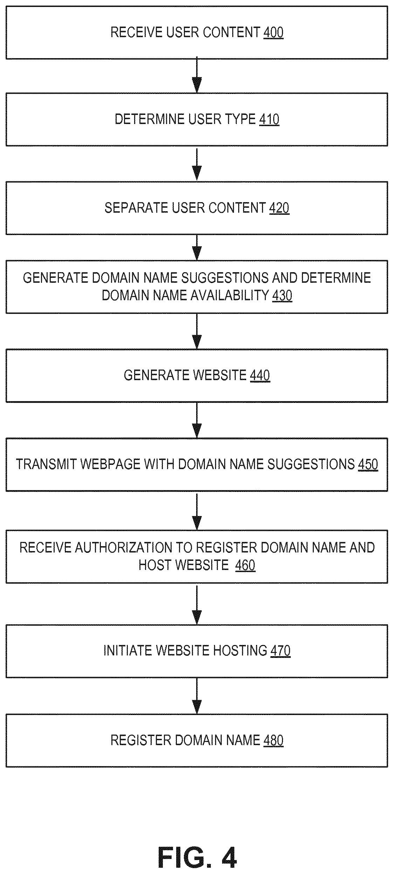

FIG. 4 is a flow diagram illustrating an example of a process for automatically generating a website and domain name suggestions, consistent with certain disclosed embodiments. In some embodiments, the method described in FIG. 4 can be performed using a computing device such as, for example, a webserver, a mainframe device, etc.

In some implementations, the computing device can be, for example, a website generator server, such as, for example, the website generator 130, described above with regard to FIG. 1.

The process can begin in 400, when the computing device receives a set of user content. In some embodiments, the computing device can receive the user content from a social networking website based on an authorization provided by a user. In such embodiments, the content can be information associated with the user's social networking account and/or webpage, as described above.

In 410, the computing device can determine a user type based on the received user content. For example, a user type can be an individual user or an entity (e.g., a company, an organization, an entertainer, a group, an event, etc.)

In some embodiments, the user content can include an indication of the user type. In other embodiments, the computing device can process the user content to determine the user type by scanning images, searching for keywords in postings, searching places visited and/or tagged, searching events visited and/or tagged, analyzing pages created by the user, analyzing overview/personal details of the user, determining types of sports, television shows, and movies the user has followed, determining other users that the user is following, and the like. For example, a computer learning algorithm and/or a neural network can be used to identify the user type.

In example embodiments, the user content may include personal photos and/or videos, textual posts with certain keywords, an indication that the user content is associated with an individual, a name of an individual, a non-business address, a non-business telephone number, an email address associated with a large webmail service (e.g., Gmail™, Yahoo™, etc.), and the like. Based on such content, the computing device may determine that the user type is an individual.

As an additional example, the user content may include group images and/or videos, product images and/or videos, logo images and/or videos, textual posts with certain keywords, textual posts with brand names, an indication that the user content is associated with an entity, an indication that the user content is associated with a specific type of entity, a name of the entity, a business address, a business telephone number, an event date, an email address associated with a website that is not associated with a large webmail service, and the like. Based on such content, the computing device may determine that the user type is an entity.

In further implementations, the computing device may determine that the user type is a specific type of entity, such as, for example, an educational entity, a business, a company, a group, an institute, a community, a brand, a website, a blog, a product, a public figure, an event, an area of interest, a hobby, an occupation, and the like.

In 420, the computing device can separate the user content into multiple sets of user content. In some embodiments, the user content can be separated based on the user type. For example, if the user type is identified as an individual, the user content can be separated into personal information, status posts, friends, activities, places, events, identified interests of the user, etc. As a further example, if the user type is identified as an entity, such as a business, a company, a brand, or a product, the user content can be separated into business information, contact information, products, services, personnel, etc.

In various embodiments, a computer learning algorithm and/or a neural network can be used to separate the user content.

In 430, the computing device can generate domain name suggestions based on the user content. For example, the computing device can extract keywords from image metadata, keywords from video metadata, and keywords from textual data. Based on the extracted keywords, the computing device can generate domain name suggestions by, for example, combining keywords, combining keywords with synonyms of the keywords, tokenizing keywords, combining keyword tokens, combining keyword tokens with matching bigrams, combining keyword tokens into pronounceable new words, etc.

Once the domain name suggestions have been generated, in some embodiments, a domain name lookup request based on the domain name suggestions can be transmitted to one or more domain name registrars, registries, and/or resellers to determine availability (e.g., to the registrar 140). Once a response is received to the domain name lookup request, in some implementations, domain name suggestions that are not available can be removed from a list of domain name suggestions.

In 440, the computing device can, at least partially, automatically generate a website based on the user content. In some embodiments, the computing device can generate the website using a preexisting template. For example, the computing device may have access to one or more templates, where each template is associated with a user type. In other words, the computing device may have access to a template for individuals, a template for companies, a template for educational entities, a template for public figures, etc.

As an example, for an individual, a website template may include a homepage with sections for images of the individual, a name of the individual, a location of the individual, friends of the individual, etc. The website template may also include webpages for contact information, a listing of current and previous employment, a history of status posts, a history of places the individual has traveled, a calendar of past and future events, a listing of friends, a listing of activities, a listing of hobbies, etc. The website template may also include hyperlinks on the homepage to other webpages on the website.

As a further example, for a company, a website template may include a homepage with sections for images associated with the company (e.g., certain personnel, certain products, a logo, office photos, etc.), a name of the company, contact information of the company, locations of the company, etc. The website template may also include webpages for a listing of employees, a listing of products, a listing of services, a history of status posts, a calendar of past and future events, etc. The website template may also include hyperlinks on the homepage to other webpages on the website.

In some embodiments, the computing device may generate the entire functional website, including a homepage, hyperlinks, and other webpages in 440. In other embodiments, the computing device may not generate the entire website in 440, but may only generate one or more functional webpages of the website (e.g., including the homepage). In further embodiments, the computing device may not generate a functional webpage, but may generate a non-functional or semi-functional mockup webpage that shows the look and feel of the website, but does not include, for example, all of the content, functional hyperlinks, functional webpage features, etc.

In 450, the computing device can transmit a webpage from the generated website to a user device with domain name suggestions that are available for registration. For example, the computing device may transmit the webpage to the user device based on a redirect from a social networking website, as discussed above.

In some embodiments, the computing device can transmit the functional homepage of the website to the user device. In other embodiments, the computing device can transmit other webpages of the website or a non-functional mockup webpage to the user device.

In some implementations, the domain name suggestions can be part of the webpage that is transmitted. In further embodiments, the computing device can transmit a separate webpage that includes the domain name suggestions, and the domain name suggestions can be included in a list that allows the user to select a domain name suggestion for registration and text boxes can be included in the webpage to allow the user to enter name and contact information, as well as administrative, billing, and payment information for registering the domain name and/or hosting the website.

In 460, the computing device can receive authorization to register a selected domain name and to initiate hosting of the website. In some embodiments, the authorization can be in response to a selection by the user of one of the suggested domain names. In other embodiments, the authorization can be in response to receiving payment details from the user for charges related to hosting the website and/or registering the domain name.

In 470, the computing device can initiate website hosting of the automatically generated website. In some embodiments, if the entire website was not created in 440 and/or if a mockup webpage was created, the computing device can complete the generation of the website, including, for example, generating each webpage. In further embodiments, the computing device can transmit the files created during website generation to a website hosting server (e.g., via File Transfer Protocol (FTP)), and the website hosting server can initiate hosting of the website and determine an internet protocol (IP) address associated with the website (e.g., from an Internet Service Provider (ISP)).

In some implementations, the computing device can be the website hosting server. In such embodiments, the computing device can process, store, and/or index the files and request an IP address from an ISP to initiate the website hosting.

In 480, the computing device can transmit a domain name registration request to register the user-selected domain name with the IP address associated with the website. For example, the computing device can transmit the request to a domain name registrar (e.g., registrar 140 shown in FIG. 1). In various embodiments, based on the registration request, the domain name registrar can register the domain name with a domain name registry and the domain name registry can associate the domain name with the IP address of the website.

While the steps depicted in FIG. 4 have been described as performed in a particular order, the order described is merely an example, and various different sequences of steps can be performed, consistent with certain disclosed embodiments. Additionally, the steps are described as discrete steps merely for the purpose of explanation, and, in some embodiments, multiple steps may be performed simultaneously and/or as part of a single computation. Further, the steps described are not intended to be exhaustive or absolute, and various steps can be inserted or removed.

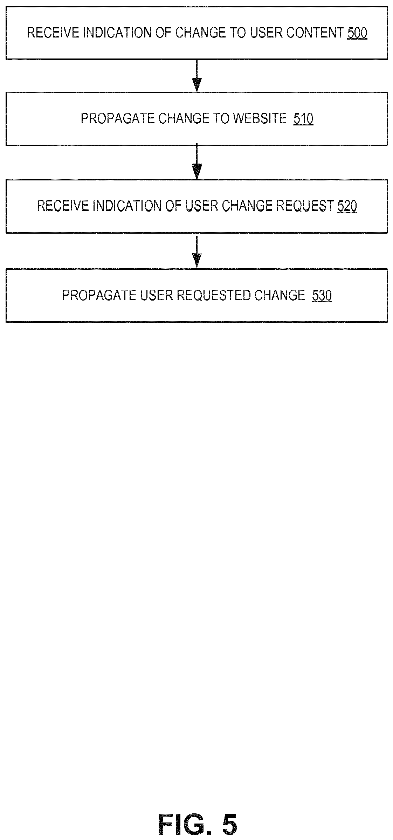

FIG. 5 is a flow diagram illustrating an example of a process for automatically managing a website, consistent with certain disclosed embodiments. In some embodiments, the method described in FIG. 5 can be performed using a computing device such as, for example, a webserver, a mainframe device, etc.

In some implementations, the computing device can be, for example, a website generator, such as, for example, the website generator 130, described above with regard to FIG. 1.

In further implementations, the computing device can be, for example, a website hosting server. The process can begin in 500, when the computing device receives an indication that a change was made to the user content at the social networking website. For example, the user may have posted new information, changed personal or business information, etc., and the social networking website may have automatically transmitted the indication that the change was made to the computing device.

In some embodiments, the indication that the change was made can include information indicating what content was changed, the updated content, and an identifier of the user.

In response to the indication of the change, in 510, the computing device can update the website based on the updated content by determining webpages on an automatically generated website that include the content that was changed, updating the webpage files based on the updated content, and storing the updated webpage files.

Accordingly, the user can maintain an updated website without having to directly perform the update operations. Instead, the user can update the automatically generated website by simply updating a social networking webpage.

In 520, the computing device can receive an indication of a user change request. In some embodiments, the indication can include information indicating what content is to be changed, the updated content, and an identifier of the user. In further embodiments, the indication can additionally or alternatively include a change to the website design (e.g., a change in website templates, a change in color scheme, a change in content arrangement, etc.), an addition or deletion of a webpage, a change to security settings of the website, instructions to change hosting servers, a change to read and/or write permissions of the website and/or individual webpages, etc.

In response to the indication of the change, in 530, the computing device can update the website based on the indication by, for example, determining webpages on the automatically generated website that include the content that was changed, updating the webpage files based on the updated content, storing the updated webpage files, transmitting the webpage files to a different server, changing website settings, etc.

Accordingly, the user can maintain an updated website directly and can control the look and feel of the website, can control how the website is hosted, can control the security of the website, and can fully control the data that is presented on the website. Further, because the user has full control over the website. the user can remove extraneous content on the website, saving processing, networking, and storage resources for the user and for viewers of the user's content. While the steps depicted in FIG. 5 have been described as performed in a particular order, the order described is merely an example, and various different sequences of steps can be performed, consistent with certain disclosed embodiments. Additionally, the steps are described as discrete steps merely for the purpose of explanation, and, in some embodiments, multiple steps may be performed simultaneously and/or as part of a single computation. Further, the steps described are not intended to be exhaustive or absolute, and various steps can be inserted or removed.

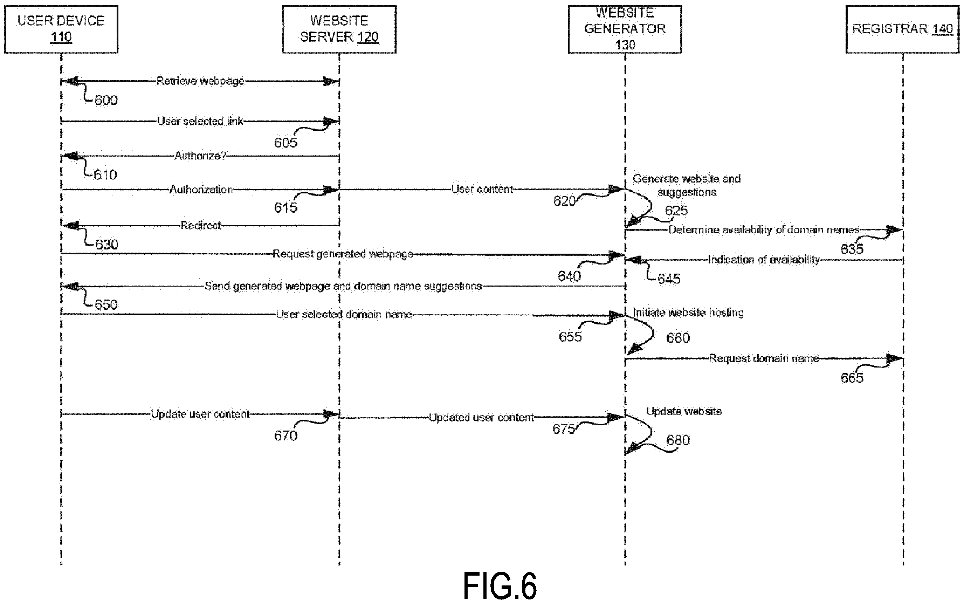

FIG. 6 is a flow diagram illustrating an example of a process for automatically generating a website and domain name suggestions and for managing the website, consistent with certain disclosed embodiments. In some embodiments, the process shown in FIG. 6 can be performed using the user device 110, the website server 120, the website generator 130, and the registrar 140, as described with regard to FIG. 1. In some embodiments, the website server 120 can be a website server of a social networking website. In further embodiments, the website generator 130 can be a website hosting server that hosts automatically generated websites.

The process can start in 600, when the user device 110 retrieves a webpage from the website server 120. In some embodiments, the webpage can be a webpage of a social networking website. In further embodiments, the webpage can include a hyperlink associated with automatic website generation. For example, the hyperlink can be a text hyperlink or can be embedded in an image or a video that indicates that the user can automatically create a website by clicking on the hyperlink.

In 605, the user device 110 can transmit an indication that the user selected the hyperlink to the website server 120.

In 610, the website server 120 can transmit a request for authorization to the user device 110. In some embodiments, the request for authorization can be a request for authorization for the website server 120 to provide user content to the website generator 130.

In 615, the user device 110 can transmit an indication of user authorization to the website server 120. In response, in 620, the website server 120 can transmit user information and/or user content from the user's webpage(s) on the website server 120 to the website generator 130.

Based on receiving the user information and/or content, in 625, the website generator can automatically generate all or part of a website or a mockup webpage of the website based on the user content, as described above. Additionally, in 625, the website generator 130 can generate domain name suggestions based on the user content, as described above.

In 630, also based on receiving the indication of user authorization in 615, the website server 120 can initiate a redirect of the user device 110 to a webpage of the automatically generated website. For example, the hyperlink associated with automatic website generation can include an IP address and/or a domain name that redirects the user device 110 to the webpage.

In 635, the website generator can determine the availability of domain name suggestions generated in 625 by transmitting a domain name availability request to registrar 140.

In 640, the user device 110 can request the automatically generated webpage based on the redirect received in 630.

In 645, the website generator 130 can receive an indication of availability for the domain names requested in 635.

In 650, the website generator 130 can transmit an automatically generated webpage and domain name suggestions to the user device 110. In some embodiments, the automatically generated webpage can include the domain name suggestions and can allow a user to select a domain name suggestion for registration. In other embodiments, the domain name suggestions can be transmitted as part of a separate webpage.

In 655, the user device 110 can transmit, to the website generator 130, an indication of a user-selected domain name. In some embodiments, the indication of the user-selected domain name may also include payment details from the user for charges related to hosting the website and/or registering the domain name.

In 660, the website generator 130 can initiate website hosting of the automatically generated website by, for example, transmitting generated webpages to a website hosting server (not shown) or by initiating hosting at the website generator 130. In some embodiments, initiating website hosting can include associating an IP address with the website (e.g., by requesting an IP address from an ISP).

In 665, the website generator 130 can register the user-selected domain name by sending a request to the registrar 140. In various embodiments, the request can include the IP address associated with the website.

In 670, the user device 110 can request an update to the user content at the website server 120. For example, a user may create or edit a post, add or delete an image, add or delete a video, add or delete a friend, etc.

In 675, the website server 120 can change the user content locally (e.g., on the social networking website) and send an indication of the updated user content to the website generator 130 and/or to the website hosting server. Based on the received indication of the updated user content, the website generator 130 or the website hosting server can update the automatically generated website at 680.

The process described with regard to FIG. 6 is merely a simplified example of automatically generating a website and domain name suggestions and managing the website, and the example is not intended to be limiting.

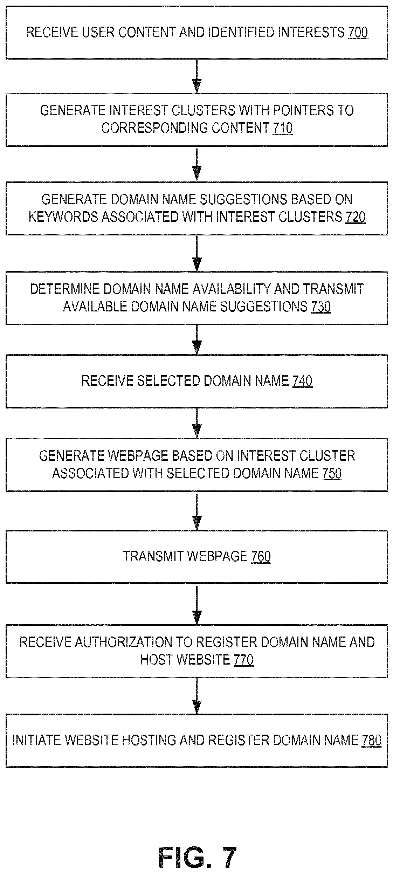

FIG. 7 is a flow diagram illustrating an example of a process for automatically generating a website and domain name suggestions, consistent with certain disclosed embodiments. In some embodiments, the method described in FIG. 7 can be performed using a computing device such as, for example, a webserver, a mainframe device, etc.

In some implementations, the computing device can be, for example, a website generator server, such as, for example, the website generator 130, described above with regard to FIG. 1.

The process can begin in 700, when the computing device receives a set of user content. In some embodiments, the computing device can receive the user content from a social networking website based on an authorization provided by a user. In such embodiments, the content can be information associated with the user's social networking account and/or webpage, as described above.

In further embodiments, the computing device can receive selected interests associated with the user and/or indications of social networking websites, blogs, or other websites that indicate interests of the user.

In still further embodiments, various content analytic algorithms can be used to separate and categorize content within the set of user content into content subject-related categories or user interest areas. These algorithms could include text analytics such as K-means, statistical word probability analytics, Bayesian analysis, and classifications based on neural network processing. Categorizations identified in this way may then be used in identifying keywords that are indicative of a categorization.

In, 710, the computing device can determine one or more user types by generating interest clusters based on the set of user content, the subject-related categories and/or user interest areas determined using one or more content analytic algorithms, the user-selected interests, and/or the websites that indicate interests of the user. The determined user types can correspond to the generated interest clusters. Additionally, in some implementations, the set of user content can be constrained to content that is associated with the determined user type(s).

In some embodiments, the set of user content can be separated by including pointers with the generated interest clusters, where the pointers point to the corresponding content used to generate the interest clusters. In further embodiments, the generated interest clusters can be associated with specific keywords (e.g., from the corresponding content).

In 720, the computing device can generate a list of domain name suggestions based on keywords associated with the generated interest clusters. The domain name suggestions can be generated by, for example, combining keywords, combining keywords with synonyms of the keywords, tokenizing keywords, combining keyword tokens, combining keyword tokens with matching bigrams, combining keyword tokens into pronounceable new words, etc. Additionally, domain name suggestions in the list of domain name suggestions can be associated with the specific content that was a contributing factor in the generation of that domain name suggestion.

In 730, the computing device can determine the availability of the generated domain name suggestions by, for example, transmitting a domain name lookup request based on the domain name suggestions to one or more domain name registrars, registries, and/or resellers (e.g., to the registrar 140). Once a response is received to the domain name lookup request, in some implementations, domain name suggestions that are not available can be removed from a list of domain name suggestion. Then, the updated list of domain name suggestions can be transmitted to a user device.

In 740, the computing device can receive a selected domain name from the list of domain name suggestions from the user device.

In 750, the computing device can, at least partially, automatically generate a website based on one or more interest clusters associated with the selected domain name and, in some embodiments, the specific content that was a contributing factor in the generation of that domain name suggestion (e.g., by accessing the content associated with the domain name suggestion in 720). Thus, the automatically generated website can include content that matches descriptive elements of the domain name suggestion selected by a user of the user device. Additionally, in some embodiments, the generated website can include software add-ons or plug-ins that can be used by viewers of the website to access the corresponding content at a source of the content and/or to access content associated with a category of the corresponding content. For example, a plug-in can provide an interface to a social networking website that can be used to provide access to the content on the social networking website.

In various embodiments, access to the content associated with the selected domain name can be provided by, for example, hyperlinks embedded in webpages of the generated website.

In some embodiments, the computing device can generate the website using a preexisting template. For example, the computing device may have access to one or more templates, where each template is associated with one or more keywords, a user type, interest clusters, etc. In other words, the computing device may have access to a template for individuals, a template for companies, a template for educational entities, a template for public figures, etc.

In some embodiments, the computing device may generate the entire functional website, including a homepage, hyperlinks, and other webpages in 750. In other embodiments, the computing device may not generate the entire website in 750, but may only generate one or more functional webpages of the website (e.g., including the homepage). In further embodiments, the computing device may not generate a functional webpage, but may generate a non-functional or semi-functional mockup webpage that shows the look and feel of the website, but does not include, for example, all of the content, functional hyperlinks, functional webpage features, etc.

In 760, the computing device can transmit a webpage from the generated website to a user device. For example, the computing device may transmit the webpage to the user device based on a redirect from a social networking website, a redirect from a website displaying the list of domain name suggestions, etc.

In some embodiments, the computing device can transmit the functional homepage of the website to the user device. In other embodiments, the computing device can transmit other webpages of the website or a non-functional mockup webpage to the user device.

In 770, the computing device can receive authorization to register the selected domain name and host the automatically generated website. In some implementations, the webpage that is transmitted in 760 can include text boxes to allow the user to enter name and contact information, as well as administrative, billing, and payment information for registering the domain name and/or hosting the website. Accordingly, authorization to register the domain name and to host the website can be received when a user submits information via the webpage.

In 780, the computing device can initiate website hosting of the automatically generated website. In some embodiments, if the entire website was not created in 750 and/or if a mockup webpage was created, the computing device can complete the generation of the website, including, for example, generating each webpage. In further embodiments, the computing device can transmit the files created during website generation to a website hosting server (e.g., via FTP), and the website hosting server can initiate hosting of the website and determine an IP address associated with the website (e.g., from an ISP).

In some implementations, the computing device can be the website hosting server. In such embodiments, the computing device can process, store, and/or index the files and request an IP address from an ISP to initiate the website hosting.

Additionally, the computing device can transmit a domain name registration request to register the user-selected domain name with the IP address associated with the website. For example, the computing device can transmit the request to a domain name registrar (e.g., registrar 140 shown in FIG. 1). In various embodiments, based on the registration request, the domain name registrar can register the domain name with a domain name registry and the domain name registry can associate the domain name with the IP address of the website.

While the steps depicted in FIG. 7 have been described as performed in a particular order, the order described is merely an example, and various different sequences of steps can be performed, consistent with certain disclosed embodiments. Additionally, the steps are described as discrete steps merely for the purpose of explanation, and, in some embodiments, multiple steps may be performed simultaneously and/or as part of a single computation. Further, the steps described are not intended to be exhaustive or absolute, and various steps can be inserted or removed.

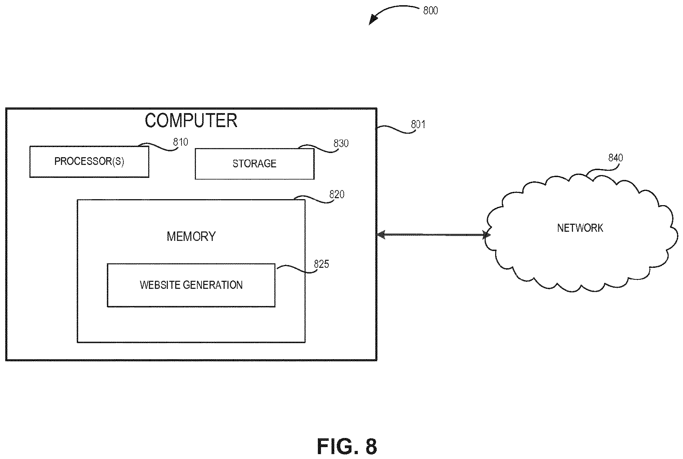

FIG. 8 is a diagram illustrating an example of a hardware system for automatically generating websites and domain name suggestions, consistent with certain disclosed embodiments. This example of a hardware system 800 includes specific examples of system components that may be used. The components and arrangement, however, may be varied.

A computer 801 may include a processor 810, a memory 820, a storage 830, and input/output (I/O) devices (not pictured). The computer 801 may be implemented in various ways and can be configured to perform any of the embodiments described above. In some embodiments, the computer 801 can be, for example, a desktop computer, a laptop, a tablet device, a mobile device (e.g., a smartphone), etc. In other embodiments, the computer 801 can be a computing device such as, for example, a database server, a web server, a mainframe computer, a distributed cluster of computing nodes and/or graphics processing units (GPUs), etc. In various embodiments, the computer 801 can be a user device (e.g., the user device 110), a website server (e.g., the website server 120), a website generator (e.g., the website generator 130), a registrar computer (e.g., the registrar 140), etc. The computer 801 may be standalone or may be part of a subsystem, which may, in turn, be part of a larger system.

The processor 810 may include one or more known processing devices, such as a microprocessor from the Intel Core™ family manufactured by Intel™, the Phenom™ family manufactured by AMD™, or the like. The memory 820 may include one or more storage devices configured to store information and/or instructions used by the processor 810 to perform certain functions and operations related to the disclosed embodiments. The storage 830 may include a volatile or nonvolatile, magnetic, semiconductor, tape, optical, removable, non-removable, or other type of computer-readable medium used as a storage device. In some embodiments, the storage 830 can include, for example, user content, webpage files, etc.

In an embodiment, the memory 820 may include one or more programs or subprograms including instructions that may be loaded from the storage 830 or elsewhere that, when executed by the processor 810, perform various procedures, operations, or processes consistent with disclosed embodiments. For example, the memory 820 may include website generation program 825 for automatically generating websites, automatically generating domain name suggestions based on user content, etc., according to various disclosed embodiments. The memory 820 may also include other programs that perform other functions, operations, and processes, such as programs that provide communication support, Internet access, etc. The website generation program 825 may be embodied as a single program, or alternatively, may include multiple subprograms that, when executed, operate together to perform the function of the website generation program 825 according to disclosed embodiments. In some embodiments, the website generation program 825 can perform all or part of the processes of FIGs. 2-6, described above.

The computer 801 may communicate over a link with a network 840. For example, the link may be a direct communication link, a local area network (LAN), a wide area network (WAN), or other suitable connection. The network 840 may include the internet, as well as other networks, which may be connected to various systems and devices.

The computer 801 may include one or more input/output (I/O) devices (not pictured) that allow data to be received and/or transmitted by the computer 801. I/O devices may also include one or more digital and/or analog communication I/O devices that allow the computer 801 to communicate with other machines and devices. I/O devices may also include input devices such as a keyboard or a mouse, and may include output devices such as a display or a printer. The computer 801 may receive data from external machines and devices and output data to external machines and devices via I/O devices. The configuration and number of input and/or output devices incorporated in I/O devices may vary as appropriate for various embodiments.

Examples of uses of the system 800 can be described by way of example with reference to the embodiments described above.

While the teachings have been described with reference to the example embodiments, those skilled in the art will be able to make various modifications to the described embodiments without departing from the true spirit and scope. The terms and descriptions used herein are set forth by way of illustration only and are not meant as limitations. In particular, although the method has been described by examples, the steps of the method may be performed in a different order than illustrated or simultaneously. Furthermore, to the extent that the terms "including", "includes", "having", "has", "with", or variants thereof are used in either the detailed description and the claims, such terms are intended to be inclusive in a manner similar to the term "comprising." As used herein, the term "one or more of' with respect to a listing of items such as, for example, A and B, means A alone, B alone, or A and B. Those skilled in the art will recognize that these and other variations are possible within the spirit and scope as defined in the following claims and their equivalents.

## Claims

1. A system (100) comprising:
one or more processors (810) ; and
one or more computer-readable media, wherein the one or more computer-readable media contain instructions that, when executed by the one or more processors, cause the one or more processors to perform operations comprising:
receiving (400), from a website server, a set of user content;
determining (410) a user type based on the set of user content;
separating (420) the set of user content into a plurality of sets of user content;
automatically generating a webpage based on the set of user content;
automatically generating (430) a plurality of domain name suggestions based on the set of user content;
transmitting a domain name lookup request based on the plurality of domain name suggestions;
determining a plurality of available domain name suggestions based on a response to the domain name lookup request;
receiving a request for a generated webpage corresponding to the webpage; and
providing (450) the generated webpage and the plurality of available domain name suggestions based on the request.

2. The system of claim 1, wherein:
automatically generating the webpage based on the set of user content comprises automatically generating a plurality of webpages; and
the plurality of webpages comprises a homepage and a webpage corresponding to each set of user content of the plurality of sets of user content

3. The system of claim 1 or 2, the operations further comprising:
receiving a selection of an available domain name suggestion of the plurality of available domain name suggestions; and
transmitting (480) a domain name registration request comprising the available domain name suggestion that was selected.

4. The system of claim 3, the operations further comprising:
initiating (780) hosting of a website by storing the webpage and requesting an Internet Protocol (IP) address for the website, wherein the domain name registration request further comprises the IP address for the website.

5. The system of any one of claims 1 to 4, the operations further comprising:
Receiving (510), from the website server, an indication of a change to the set of user content; and
updating the webpage based on the indication of the change.

6. The system of any one of claims 1 to 5, the operations further comprising:
receiving, from a user associated with the set of user content, a request to change the set of user content; and
updating the webpage based on the request.

7. The system of any one of claims 1 to 6, wherein the website server corresponds to a social networking website.

8. The system of any one of claims 1 to 7, wherein the set of user content comprises one or more of textual information, images, or videos.

9. The system of any one of claims 1 to 8, wherein the user type is at least one of an individual or an entity.

10. The system of claim 9, wherein the entity is one or more of an educational entity, a business, a company, a group, an institute, a community, a brand, a website, a blog, a product, an area of interest, a hobby, an occupation, or a public figure.

11. The system of claim 1, wherein automatically generating the webpage comprises:
determining a website template based on the user type.

12. The system of any one of claims 1 to 11, wherein automatically generating the webpage comprises determining a website template based on the set of user content.

13. The system of any one of claims 1 to 12, wherein automatically generating the plurality of domain name suggestions based on the set of user content comprises:
extracting keywords from one or more of textual information, images, or videos in the set of user content; and
generating the plurality of domain name suggestions using the keywords.

14. The system of any one of claims 1 to 13, wherein the generated webpage comprises one or more of the webpage, a mockup webpage corresponding to the webpage, or a homepage.

15. The system of any one of claims 1 to 14, wherein the generated webpage comprises the available domain name suggestions.

16. The system of any one of claims 1 to 15, wherein:
separating the set of user content into the plurality of sets of user content comprises generating interest clusters based on the set of user content; and
the interest clusters comprise pointers to corresponding content associated with the interest clusters.

17. The system of claim 16, wherein automatically generating the plurality of domain name suggestions based on the set of user content comprises automatically generating the plurality of domain name suggestions based on keywords associated with the interest clusters or determined during generation of the interest clusters.

18. The system of claim 17, the operations further comprising receiving a selection of an available domain name suggestion of the plurality of available domain name suggestions, wherein automatically generating the webpage based on the set of user content comprises automatically generating the webpage based on the selection of the available domain name suggestion and the webpage is generated using content that corresponds to an interest cluster used to generate the available domain name suggestion that was selected.

19. A method comprising:
receiving (400), from a website server, a set of user content;
determining (410) a user type based on the set of user content;
separating (420) the set of user content into a plurality of sets of user content;
automatically generating a webpage based on the set of user content;
automatically, using one or more processors, generating (430) a plurality of domain name suggestions based on the set of user content;
transmitting a domain name lookup request based on the plurality of domain name suggestions;
determining a plurality of available domain name suggestions based on a response to the domain name lookup request;
receiving a request for a generated webpage corresponding to the webpage; and
providing the generated webpage and the plurality of available domain name suggestions based on the request.

20. A non-transitory computer readable storage medium comprising instructions for causing one or more processors to:
receive, from a website server, a set of user content;
determine a user type based on the set of user content;
separate the set of user content into a plurality of sets of user content;
automatically generate a webpage based on the set of user content;
automatically generate a plurality of domain name suggestions based on the set of user content;
transmit a domain name lookup request based on the plurality of domain name suggestions;
determine a plurality of available domain name suggestions based on a response to the domain name lookup request;
receive a request for a generated webpage corresponding to the webpage; and
provide the generated webpage and the plurality of available domain name suggestions based on the request.
